# FASCICULE DE BREVET EUROPEEN

(11) **EP 3 112 091 B1**
(45) Date de publication et mention de la délivrance du brevet: **11.01.2023**
(21) Numéro de dépôt: 16176737.1
(22) Date de dépôt: 28.06.2016
(51) Int. Cl.: B25G 1/04

(54) **SYSTEME D'ASSEMBLAGE DE MANCHE POUR UN OUTIL A MAIN**
VERBINDUNGSSYSTEM FÜR EINEN GRIFF FÜR EIN HANDWERKZEUG
SYSTEM FOR HANDLE ASSEMBLY FOR A HAND TOOL

(30) Priorité: 02.07.2015 FR 1556262
(43) Date de publication de la demande: 04.01.2017
(73) Titulaire: SECATEURS PRADINES, 49150 Baugé-en-Anjou (FR)
(72) Inventeur: DEVILLE, Antoine, 49150 BAUGE EN ANJOU (FR)
(74) Mandataire: Novagraaf Technologies

(56) Documents cités:
- WO-A1-2008/110888
- US-A- 3 984 192
- US-A- 4 905 548
- US-A1- 2001 047 570
- US-A1- 2008 276 429
- US-A1- 2014 101 878
- US-B1- 7 028 375

## Description

L'invention concerne un système d'assemblage de manche pour un outil à main, en particulier pour un outil à main de grande longueur comme un élagueur par exemple.

Les outils à main de grande longueur comme un élagueur comportent soit une perche de grande longueur soit un ou deux manches de grande longueur. De ce fait, le manche ou la perche est en plusieurs tronçons qui sont assemblés les uns à la suite des autres. Pour des raisons de transport et de stockage, ces outils à mains de grande longueur doivent pouvoir être démontés relativement facilement. Toutefois, ce démontage ne doit être possible que de manière volontaire. Il ne doit pas pouvoir survenir lors d'une utilisation de l'outil à main de grande longueur. A cette fin, des moyens de sécurisation d'un assemblage de deux des tronçons de manche l'un à l'autre sont prévus. Actuellement, ces moyens de sécurisation sont à butée ou à arcboutement, comme décrits dans les documents US 2014/0000065 et US 2009/0235512. Ce sont des dispositifs débrayables afin de permettre un désassemblage. De ce fait, ils sont complexes, car ils comportent de nombreuse pièces, et fragiles.

Le document US4905548 illustre encore une autre conception comportant des moyens de retenue de deux tronçons d'un manche télescopique. Des systèmes d'assemblage sont également divulgués dans les documents US 7 028 375 B1, WO 2008/110888 A1, et US 3 984 192. Le document US 2014/101878 A1 décrit un système selon le préambule de la revendication 1.

Un but de l'invention est de fournir un système d'assemblage de tronçons de manche qui soit simple et robuste.

A cet effet, selon l'invention, il est prévu un système d'assemblage de manche tel que défini à la revendication 1. Avantageusement, mais facultativement, le système d'assemblage selon l'invention présente au moins l'une des caractéristiques techniques additionnelles suivantes :
- le filetage est un filetage trapézoïdal.
- le système d'assemblage comporte en outre des moyens de reprise d'effort entre les premier et deuxième tronçons de manche.
- les moyens de reprise d'effort comportent une première portion de l'un des premier et deuxième tronçons de manche et une seconde portion de l'autre des premier et deuxième tronçons de manche, les première et seconde portions étant complémentaires de forme l'une de l'autre.
- les première et seconde portions sont de forme cylindrique de révolution.
- les moyens de reprise d'effort sont placés entre les moyens de sécurisation d'un assemblage et les moyens de retenue.
- le système est un système d'assemblage de manche pour un élagueur.

D'autres caractéristiques et avantages de l'invention apparaîtront lors de la description ci-après d'un mode de réalisation préférée de l'invention. Au dessin annexé :

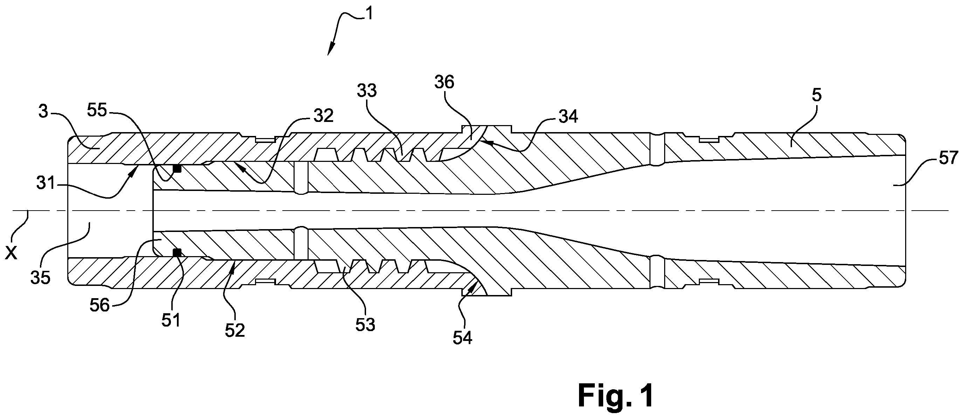

- La figure 1 est une vue en coupe d'un système d'assemblage selon l'invention.

En référence à la figure 1, nous allons décrire un système d'assemblage de manche 1 selon l'invention. Le système d'assemblage de manche 1 comporte ici deux tronçons de manche 3,5.

Le premier tronçon de manche 3 est de forme générale cylindrique de révolution d'axe longitudinal X. Le premier tronçon de manche 3 est creux : il comporte un évidement 35 débouchant selon l'axe longitudinal X au niveau d'une extrémité 36. Depuis cette extrémité 36, le premier tronçon de manche 3 comprend successivement, de droite à gauche sur la figure 1 :
- Une surface d'extrémité qui est une surface d'appui 34 formant une butée d'appui du premier tronçon de manche 3 ;
- Une première partie comportant un filetage 33. Le filetage 33 est ici un filetage trapézoïdal. D'autres types de filetage peuvent être utilisés en variante de réalisation. Le filetage 33 s'étend longitudinalement sur une première longueur prédéterminée de l'évidement 35 du premier tronçon de manche 3.
- Une deuxième partie comportant une première portion 32 présentant, ici, une forme cylindrique de révolution d'axe X. Cette première portion 32 est formée d'une surface de contact latérale délimitant, au niveau de cette première portion 32, l'évidement 35 du premier tronçon de manche 3. De nouveau, cette première portion 32 s'étend longitudinalement sur une deuxième longueur prédéterminée de l'évidement 35 du premier tronçon de manche 3.
- Une troisième partie comportant une surface d'appui 31 qui s'étend longitudinalement sur une troisième longueur prédéterminée de l'évidement 35 du premier tronçon de manche 3. La surface d'appui 31 est de forme cylindrique de révolution d'axe X et délimite au niveau de la troisième partie l'évidement 35 du premier tronçon de manche 3.

Le deuxième tronçon de manche 5 est, lui aussi, de forme générale cylindrique de révolution d'axe longitudinal X. Le deuxième tronçon de manche 5 est creux : il comporte un évidement 57 débouchant selon l'axe longitudinal X au niveau d'une extrémité 56. Depuis cette extrémité 56, le deuxième tronçon de manche 5 comprend successivement, de gauche à droite sur la figure 1 :
- Une gorge annulaire 55 réalisée sur une paroi latérale externe de l'extrémité 56 du deuxième tronçon de manche 5. La gorge annulaire 55 reçoit un joint de frottement 51. Le joint de frottement 51 s'étend, radialement de manière centrifuge, en saillie depuis la paroi latérale externe.
- Une première partie comportant une seconde portion 52 présentant, ici, une forme cylindrique de révolution d'axe X. Cette seconde portion 52 est formée d'une surface de contact latérale formant, au niveau de cette seconde portion 52, la paroi latérale du deuxième tronçon de manche 5. Cette seconde portion 52 s'étend longitudinalement sur une longueur au moins sensiblement équivalente à la deuxième longueur prédéterminée de l'évidement 35 du premier tronçon de manche 3.
- Une deuxième partie comportant un filetage 53. Le filetage 53 est ici un filetage trapézoïdal. D'autres types de filetage peuvent être utilisés en variante de réalisation. Le filetage 53 s'étend longitudinalement sur une longueur au moins sensiblement équivalente à la première longueur prédéterminée de l'évidement 35 du premier tronçon de manche 3.
- Une surface d'extrémité qui est une surface d'appui 54 formant une butée d'appui du deuxième tronçon de manche 5.

Les filetages 33 et 53 sont complémentaires l'un de l'autre. Il en est de même des première 32 et seconde 52 portions qui présente des formes complémentaires l'une de l'autre. La première portion 32 est une portion femelle et la seconde portion 52 est une portion mâle.

Nous allons maintenant décrire un assemblage des premier 3 et deuxième 5 tronçons de manche l'un avec l'autre.

L'extrémité 56 du deuxième tronçon de manche 5 est introduite, selon l'axe longitudinal X, dans l'évidement 35 du premier tronçon de manche 3, puis le deuxième tronçon de manche 5 est vissé en faisant coopérer l'un avec l'autre les filetages 33 et 53, jusqu'à ce que la surface d'appui 54 du deuxième tronçon de manche 5 vienne en appui avec la surface d'appui 34 lors d'un serrage. Les deux surfaces d'appui 34,54 forment alors une butée d'appui du système d'assemblage 1.

Les filetages 33 et 53 forment alors des moyens de retenue du système d'assemblage 1 selon l'invention.

Une fois le serrage du deuxième tronçon de manche 5 dans le premier tronçon de manche 3 réalisé, les première 32 et seconde 52 portions sont en contact l'une avec l'autre du fait de leur complémentarité de forme et d'un ajustement glissant ainsi réalisé entre les deux portions 32,52. Elles s'étendent en regard et en contact l'une de l'autre. Les première 32 et seconde 52 portions forment alors des moyens de reprise d'effort du système d'assemblage 1.

Cela permet de transmettre les efforts de flexion, en particulier, de l'un des premier 3 et deuxième 5 tronçons de manche vers l'autre des premier 3 et deuxième 5 tronçons de manche.

D'autre part, une fois le serrage du deuxième tronçon de manche 5 dans le premier tronçon de manche 3 réalisé, le joint de frottement 51 est écrasé dans la gorge annulaire 55 par appui de la surface d'appui 31 du premier tronçon de manche 3 qui s'étend alors en regard de la gorge annulaire 55. L'écrasement du joint de frottement 51 permet une sécurisation du serrage ainsi réalisé entre les premier 3 et deuxième 5 tronçons de manche. La gorge annulaire 55, le joint de frottement 51 et la surface d'appui 31 forment des moyens de sécurisation d'un assemblage par frottement du système d'assemblage 1 selon l'invention.

## Revendications

1. Système d'assemblage de manche (1) comportant des premier (3) et deuxième (5) tronçons de manches destinés à être assemblés l'un avec l'autre, des moyens de retenue (33,53) de l'un des premier et deuxième tronçons de manche dans l'autre des premier et deuxième tronçons de manche et des moyens de sécurisation par frottement (31,51,55) d'un assemblage des premier et deuxième tronçons de manche, et dans lequel :
- les moyens de retenue comprennent un filetage permettant de visser l'un des premier et deuxième tronçons de manche dans l'autre des premier et deuxième tronçons de manche
- les moyens de sécurisation par frottement comportent un joint de frottement (51) interposé entre les premier et deuxième tronçons de manche,
système **caractérisé en ce que**
l'un des premier et deuxième tronçons de manche comporte une gorge annulaire de réception (55) du joint de frottement et l'autre des premier et deuxième tronçons de manche comporte une surface d'appui (31) apte à s'étendre en regard de la gorge annulaire, et **en ce que**, une fois le serrage du deuxième tronçon de manche (5) dans le premier tronçon de manche (3) réalisé, le joint de frottement (51) est écrasé radialement dans la gorge annulaire de réception (55) par appui de ladite surface d'appui (31) qui s'étend alors en regard de la gorge annulaire (55).

2. Système d'assemblage selon la revendication 1, **caractérisé en ce que** le filetage est un filetage trapézoïdal.

3. Système d'assemblage selon l'une des revendications 1 ou 2, **caractérisé en ce qu'**il comporte en outre des moyens de reprise d'effort (32,52) entre les premier et deuxième tronçons de manche.

4. Système d'assemblage selon la revendication 3, **caractérisé en ce que** les moyens de reprise d'effort comportent une première portion (32) de l'un des premier et deuxième tronçons de manche et une seconde portion (52) de l'autre des premier et deuxième tronçons de manche, les première et seconde portions étant complémentaires de forme l'une de l'autre.

5. Système d'assemblage selon la revendication 4, **caractérisé en ce que** les première et seconde portions sont de forme cylindrique de révolution.

6. Système d'assemblage selon l'une quelconque des revendications 3 à 5, **caractérisé en ce que** les moyens de reprise d'effort sont placés entre les moyens de sécurisation d'un assemblage et les moyens de retenue.

7. Système selon l'une quelconque des revendications 1 à 6, **caractérisé en ce qu'**il est un système d'assemblage de manche pour un élagueur.

## Patentansprüche

1. Verbindungssystem (1) für einen Griff, umfassend einen ersten (3) und einen zweiten (5) Griffabschnitt, die dazu bestimmt sind, miteinander verbunden zu werden, Mittel (33, 53) zum Halten eines des ersten und des zweiten Griffabschnitts in dem anderen des ersten und des zweiten Griffabschnitts, und Mittel (31, 51, 55) zum Sichern einer Verbindung des ersten und des zweiten Griffabschnitts durch Reibung, und wobei:
- die Haltemittel ein Gewinde beinhalten, das es ermöglicht, einen des ersten und des zweiten Griffabschnitts in den anderen des ersten und des zweiten Griffabschnitts zu schrauben
- die Mittel zum Sichern durch Reibung eine Reibungsdichtung (51) umfassen, die zwischen dem ersten und dem zweiten Griffabschnitt eingefügt ist, wobei das System **dadurch gekennzeichnet ist, dass** einer des ersten und des zweiten Griffabschnitts eine ringförmige Nut (55) zum Empfangen der Reibungsdichtung umfasst und der andere des ersten und des zweiten Griffabschnitts eine Auflageoberfläche (31) umfasst, die geeignet ist, um sich gegenüber der ringförmigen Nut zu erstrecken, und dass, sobald das Einspannen des zweiten Griffabschnitts (5) in den ersten Griffabschnitt (3) erfolgt ist, die Reibungsdichtung (51) in der ringförmigen Empfangsnut (55) durch Auflage der Auflageoberfläche (31), die sich dann gegenüber der ringförmigen Nut (55) erstreckt, radial gequetscht wird.

2. Verbindungssystem nach Anspruch 1, **dadurch gekennzeichnet, dass** das Gewinde ein trapezförmiges Gewinde ist.

3. Verbindungssystem nach einem der Ansprüche 1 oder 2, **dadurch gekennzeichnet, dass** es außerdem Kraftaufnahmemittel (32, 52) zwischen dem ersten und dem zweiten Griffabschnitt umfasst.

4. Verbindungssystem nach Anspruch 3, **dadurch gekennzeichnet, dass** die Kraftaufnahmemittel einen ersten Teil (32) eines des ersten und des zweiten Griffabschnitts und einen zweiten Teil (52) des anderen des ersten und des zweiten Griffabschnitts umfassen, wobei der erste und der zweite Teil in ihrer Form zueinander komplementär sind.

5. Verbindungssystem nach Anspruch 4, **dadurch gekennzeichnet, dass** der erste und der zweite Teil rotationszylindrisch geformt sind.

6. Verbindungssystem nach einem der Ansprüche 3 bis 5, **dadurch gekennzeichnet, dass** die Kraftaufnahmemittel zwischen den Mitteln zum Sichern einer Verbindung und den Haltemitteln angeordnet sind.

7. System nach einem der Ansprüche 1 bis 6, **dadurch gekennzeichnet, dass** es ein Verbindungssystem für den Griff für eine Astschere ist.

## Claims

1. Handle assembly system (1) comprising first (3) and second (5) handle parts which are intended to be assembled together, means (33, 53) for retaining one of the first and second handle parts in the other of the first and second handle parts, and friction securing means (31, 51, 55) for an assembly of the first and second handle parts, and:
- the retaining means comprising a thread which makes it possible to screw one of the first and second handle parts into the other of the first and second handle parts
- the friction securing means comprising a friction seal (51) which is interposed between the first and second handle parts, the system being **characterized in that** one of the first and second handle parts has an annular groove (55) for receiving the friction seal and the other of the first and second handle parts has a bearing surface (31) which is capable of extending facing the annular groove, and **in that,** once the second handle part (5) is tightened in the first handle part (3), the friction seal (51) is crushed radially into the annular receiving groove (55) by pressing said bearing surface (31) which then extends facing the annular groove (55).

2. Assembly system according to claim 1, **characterized in that** the thread is a trapezoidal thread.

3. Assembly system according to either claim 1 or claim 2, **characterized in that** it further comprises means (32, 52) for taking up load between the first and second handle parts.

4. Assembly system according to claim 3, **characterized in that** the load take-up means have a first portion (32) for one of the first and second handle parts and a second portion (52) for the other of the first and second handle parts, the first and second portions being complementary to one another.

5. Assembly system according to claim 4, **characterized in that** the first and second portions are rotationally cylindrical in shape.

6. Assembly system according to any of claims 3 to 5, **characterized in that** the load take-up means are placed between the assembly securing means and the retaining means.

7. System according to any of claims 1 to 6, **characterized in that** it is a handle assembly system for a tree pruner.
